# EUROPÄISCHE PATENTSCHRIFT

(11) **EP 1 601 711 B1**
(45) Veröffentlichungstag und Bekanntmachung des Hinweises auf die Patenterteilung: **02.05.2007**
(21) Anmeldenummer: 04719394.1
(22) Anmeldetag: 11.03.2004
(51) Int. Cl.: C08G 77/06

(54) **HERABSETZUNG DER VERNETZUNGSTEMPERATUR BEI DER HEISSVERNETZUNG VON ORGANISCHEN POLYMEREN**
REDUCTION OF THE CROSS-LINKING TEMPERATURE DURING THE HOT-CROSS-LINKING OF ORGANIC POLYMERS
ABAISSEMENT DE LA TEMPERATURE DE RETICULATION LORS DE LA RETICULATION A CHAUD DE POLYMERES ORGANIQUES

(30) Priorität: 12.03.2003 DE 10310806
(43) Veröffentlichungstag der Anmeldung: 07.12.2005
(73) Patentinhaber: Degussa Initiators GmbH & Co. KG, 82049 Pullach (DE)
(72) Erfinder: KUNZ, Martin, 82544 Dettenhausen (DE); LISCH, Dietmar, 85630 Grasbrunn (DE); ZEISS, Werner, 82547 Eurasburg (DE)
(74) Vertreter: Huber, Bernhard
(86) Internationale Anmeldenummer: PCT/EP2004/002540
(87) Internationale Veröffentlichungsnummer: WO 2004/081102

(56) Entgegenhaltungen:
- US-A- 4 340 647

## Beschreibung

Die Erfindung betrifft das Gebiet der Herstellung von heißvernetzten (heißvulkanisierten) organischen Polymeren, insbesondere von Polyorganosiloxanen, durch Vernetzungskatalysatoren.

Gegenstände aus heißvulkanisiertem Silikonkautschuk (vernetzem Polyorganosiloxanen) finden breite Anwendung wegen ihrer guten Temperaturbeständigkeit, Chemikalienresistenz, Inertheit, Transparenz, Elastizität usw.

Die Herstellung von heißvulkanisierten Silikonkautschukartikeln umfasst in der Regel einen Extrusions- oder Spritzgussvorgang mit anschließender Vernetzung bei erhöhter Tempertur innerhalb oder außerhalb einer Form.

Zur Heißvernetzung bzw. Vulkanisation von Silikonkautschuk werden organische Peroxide eingesetzt. Es ist bekannt, solche Peroxide in Knetern oder auf Walzenstühlen in den Silikonkautschuk einzumischen und diese Compounds dann auf Extrudern, Spritzgussmaschinen, Pressen oder anderen formgebenden Vorrichtungen zu verarbeiten. Nach der Formgebung wird dann die Vernetzungsreaktion durch Einstellung entsprechender erhöhter Temperatur eingeleitet. Hierzu dienen Folgeeinrichtungen wie z.B. Infrarotöfen, Heißluft, beheizte Formen und dgl. In jedem Fall muss hierbei die Zersetzungstemperatur des eingearbeiteten Peroxids errreicht werden. Je nach der Art des eingesetzten Peroxids müssen deshalb entsprechend hohe Temperaturen angewendet werden.

In ähnlicher Weise erfolgt auch die Vernetzung anderer organischer Polymere mittels organischer Peroxide.

Ein wesentlicher Kostenfaktor bei diesen Heißvernetzungsmethoden ist die zur Erreichung der Zersetzungstemperatur des Peroxids erforderliche Erhitzung des zu vernetzenden Polymers. Außerdem sind durch die erforderlichen relativ hohen Temperaturen auch entsprechende apparative Maßnahmen erforderlich, die um so aufwändiger werden, je höher die erforderliche Temperatur ist. Eine Absenkungsmöglichkeit für die erforderlichen Vernetzungstemperaturen durch beispielsweise katalytisch wirkende Zusätze ist bisher nicht gefunden worden. Man begnügte sich mit einer Reduzierung der Vernetzungszeiten bei Aufrechterhaltung der Temperaturen auf dem hohen Niveau.

Aus der japanischen Offenlegungsschrift Sho 60-120755 ist es bekannt, bei warmhärtenden Silikongummizusammensetzungen die Härtungsgeschwindigkeit durch Zusatz eines Polysilalkylensiloxans, Polysilans oder Carbosilans, das im Molekül mindestens zwei SiH-Bindungen aufweist, zu erhöhen. Eine Herabsetzung der Härtungstemperatur lässt sich daraus nicht entnehmen oder herleiten. Sämtliche Beispiele arbeiten bei 170 bis 200 °C und einem Druck von 30 kg/cm².

Der Erfindung liegt daher die Aufgabe zugrunde, die Temperatur für die Vernetzungsreaktion auf einen für das jeweils verwendete organische Peroxid bisher nicht brauchbaren niedrigeren Temperaturbereich abzusenken, ohne eine Verschlechterung der Eigenschaften der vernetzten Produkte in Kauf nehmen zu müssen.

Gelöst wird diese Aufgabe erfindungsgemäß durch die Verwendung von Polyorganohydrogensiloxan in einer Menge von 0,1 bis 10 Gew.-% bezogen auf 100 Gew.-Teile Polymer als Mittel zur Herabsetzung der Vernetzungstemperatur bei der Heißvernetzung von organischen Polymeren mit organischen Peroxiden.

Überraschenderweise gelingt es erfindungsgemäß, die Heißvernetzung der organischen Polymeren bei Temperaturen durchzuführen, die deutlich unterhalb der Zersetzungstemperatur des jeweils verwendeten organischen Peroxids liegt. Dabei gelingt es je nach Art des zu vernetzenden Polymeren und des eingesetzten organischen Peroxids, eine rasche Vulkanisation bei Temperaturen zu erreichen, die um 20 bis 50 °C niedriger liegen als die Zersetzungstemperatur des organischen Peroxids, bei der bisher die Heißvulkanisation vorgenommen werden musste.

Ein weiterer Gegenstand der Erfindung ist daher ein Verfahren zur Vernetzung von Polymeren durch Erhitzen in Gegenwart mindestens eines organischen Peroxids, das dadurch gekennzeichnet ist, dass man als Vernetzungskatalysator Polyorganohydrogensiloxan in einer Menge von 0,1 bis 10 Gew.-% bezogen auf 100 Gewichtsteile Polymer zusetzt und die Härtung bei einer Temperatur, die mindestens 20 ° C unter der Zerfallstemperatur des Peroxids liegt, durchführt

Trotz dieser erfindungsgemäß erreichten niedrigeren Vernetzungstemperatur werden die Produkteigenschaften nicht verschlechtert, sondern in vielen Fällen sogar noch verbessert. So wird gemäß der Erfindung nicht nur eine wesentliche Energieersparnis erreicht, sondern die Flexibilität bei der Anpassung der Verfahrungsbedingungen wird verbessert, der Vernetzungsgrad in vielen Fällen erhöht, die Gelbfärbung des Produktes verringert und es können bisher aufgrund der hohen Zersetzungstemperaturen für die Heißvernetzung ungeeignete Peroxide verwendet werden, welche bei niedriger Temperatur zersetzbare Peroxide, die jedoch hinsichtlich Geruch, Verursachung von Gelbfärbung und dgl. Nachteile aufweisen, ersetzen können.

Die erfindungsgemäß als Vernetzungskatalysatoren verwendeten Polyorganohdyrogensiloxane sind bekannt und im Handel erhältlich. Es handelt sich dabei um offenkettige verzweigte oder unverzweigte Polymere mit bis zu 1000 Si-Einheiten oder auch cyclische Polymere. Bevorzugt verwendet werden offenkettige Polymethylhydrogensiloxane, besonders bevorzugt solche, deren innere Kettenglieder im Wesentlichen aus CH₃SiH-Einheiten bestehen. Es können jedoch auch CH₃SiCH₃-Gruppen vorliegen, vorausgesetzt es liegen pro Siloxanmolekül mehr als zwei CH₃SiH-Gruppen vor. Vorzugsweise sollten mindestens 30 % der Kettenglieder, besonders bevorzugt mindestens 50 % der Kettenglieder aus CH₃SiH-Gruppen bestehen. Die CH₃-Gruppen können auch ganz oder teilweise durch andere Alkyl- oder Arylgruppen ersetzt sein.

Die Menge des Polyorganohydrogensiloxans sollte, wie oben erwähnt, mindestens 0,1 Gew.-%, bezogen auf 100 Gew.-Teile Polymer betragen, Mengen von mehr als 10 Gew.-% sind unnötig und ergeben keinen weiteren Vorteil. Vorzugsweise verwendet man eine Menge zwischen 0,5 und 5 Gew.-%.

Die erfindungsgemäß verwendeten Polyorganohydrogensiloxane weisen je nach der Kettenlänge ihrer Moleküle leicht bewegliche flüssige bis ölartige oder wachsartige, aber noch zum Warmeinkneten geeignete Konsistenz auf.

Als organische Peroxide können für die erfindungsgemäße Heißvulkanisation grundsätzlich die Mitglieder aller sieben organischen Peroxidgruppen, nämlich Diacylperoxide, Perester, Dialkylperoxide, Perketale, Ketonperoxide, hydroperoxide und Peroxidicarbonate, verwendet werden. Besonders bevorzugt sind aufgrund ihrer guten Eignung die Perketale, unter diesen besonders bevorzugt TMCH (1,1-Di(t-butylperoxy)-3,5,5-trimethylcyclohexan). Eine weitere sehr gut geeignete Gruppe sind Dialkylperoxide. Unter diesen wird DHBP (2,5-Dimethyl-2,5-di(t-butylperoxy)hexan) bevorzugt. Geeignet sind aber auch andere Dialkylperoxide, wie z.B. Dicumylperoxid DCUP.

Ebenso sind geeignet die Diacylperoxide, wobei beispielsweise Dilauroylperoxid sich als interessant herausgestellt hat, Perester, wie Tert-Butylperoxyester, z. B. TBPA und TBPB, wobei solche Perester ohne aromatische Gruppen besser als solche mit aromatischen Gruppen geeignet sind, Ketonperoxide wie CHP, Peroxydicarbonate und Hydroperoxide.

Die Mengen an Peroxid, die normalerweise für die Heißvernetzung eingesetzt werden, liegen im Allgemeinen zwischen 0,1 und 5 Gew.-%.

Der Bereich von 0,1 bis 10 Gew.-% Polyorganohydrogensiloxan bezogen auf Polymer eignet sich vor allem für die Vernetzung von Silikonkautschuk. Bei anderen Polymeren, die nicht auf Siloxanbasis aufgebaut sind, reichen normalerweise Mengen nahe der unteren Grenze dieses Bereichs aus, um die angestrebte Temperaturherabsetzung zu erzielen. Da in diesem Falle das katalytisch wirksame Polyorganohydrogensiloxan eine Fremdsubstanz im heißvernetzten Polymer darstellt, wird vorzugsweise mit der geringsten noch geeigneten Menge gearbeitet.

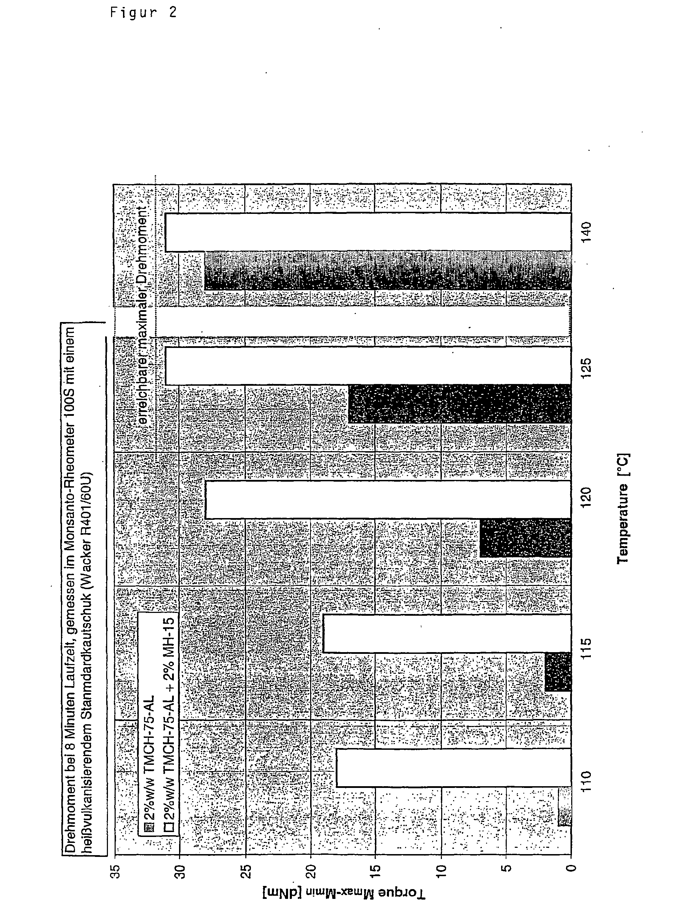

Ein besonderer Vorteil der erfindungsgemäßen Arbeitsweise besteht darin, dass dadurch sogar eine Heißvulkanisation bei Temperaturen erzielbar ist, bei welchen bisher eine Vernetzung mit dem gleichen Peroxid überhaupt nicht erreicht werden konnte. So ergibt sich aus der graphischen Darstellung in Figur 2 der beigefügten Zeichnung, dass erfindungsgemäß eine Vernetzung eines bestimmten Silikonkautschuks mit dem gleichen organischen Peroxid und in gleicher Menge bereits bei 110 °C erzielt werden konnte, die in Abwesenheit des Vernetzungskatalysators Polymethylhydrogensiloxan erst bei 140 °C in zufriedenstellendem Maße erzielbar ist.

Wie erwähnt, eignet sich die erfindungsgemäße Verwendung von Polyorganohydrogensiloxanen zur Erniedrigung der Temperatur bei der Heißvernetzung von organischen Polymeren mittels organischen Peroxiden generell. So wirkt die erfindungsgemäße Temperaturherabsetzung typisch bei ungesättigten Polyesterharzen, wie z.B. Orthophtalsäurharzen, Ethylenvinylacetatharz (EVA), Polyvinylalkoholharzen (PVA), Ethylpropyldienkautschuk (EPDM), Styrol-Butadienkautschuk (SBR) und Nitrilbutadienkautschuk (NBR). Derartige, mit organischen Peroxiden härtbare Kunststoffe weisen olefinische Doppelbindungen auf, die für den durch die erfindungsgemäße Verwendung von Polyorganohydrogensiloxanen erzielten Effekt der Herabsetzung der Vernetzungstemperatur wesentlich erscheinen.

Durch die erfindungsgemäß erzielte Herabsetzung der Vernetzungs- bzw. Vulkanisationstemperatur gelingt es, bei den bevorzugten Zusammensetzungen in einen niederen Temperaturenbereich zu gelangen, bei dem eine drucklose Vernetzung erzielbar ist. Daher wird es erfindungsgemäß möglich, die Vernetzung von Polymeren, die bisher nur bei einer Temperatur durchführbar war, welche eine Druckanwendung nötig machte, nunmehr auch drucklos durchzuführen, obwohl das gleiche organische Peroxid verwendet wird. Die damit ermöglichte drucklose Vernetzung bedeutet eine wesentliche Verbesserung und Vereinfachung bei der Herstellung von hitzegehärteten Gegenständen, die beispielsweise aus Silikongummi oder Polyesterharz bestehen. Insbesondere werden dadurch komplexere Formteile besser herstellbar.

Die folgenden Beispiele erläutern die Erfindung in Verbindung mit der beigefügten Zeichnung weiter. In der Zeichnung stellen dar:
Figur 1 den Härtungsverlauf, gemessen als Drehmoment bei der Vernetzung von Silikonkautschuk mit DHBP bei Temperaturen von 130 bis 160 °C in Gegenwart und Abwesenheit von Polymethylhydrogensiloxan.
Figur 2 zeigt den Härtungsverlauf einer anderen Zusammensetzung wie in Figur 1 bei Temperaturen von 110 bis 140 °C.
Figur 3 zeigt den Härtungsverlauf bei einer noch anderen Zusammensetzung wie in Figur 1 bei Temperaturen von 140 °C und 160 °C.
Figur 4 zeigt den Härtungsverlauf bei noch einer anderen Zusammensetzung wie in Figur 1 bei Temperaturen von 120 bis 140 °C.

### Beispiel 1

Auf einem Walzenstuhl werden je 100 g Silikonkautschuk (R401/60U) mit 0,6 Gew.-% DHBP gemischt. In einem erfindungsgemäßen Ansatz wurde dieser Mischung zusätzlich 1 % Polymethylhydrogensiloxan (MH-15) zugesetzt. Die erhaltenen Mischungen wurden auf verschiedene Temperaturen von 130 bis 160 °C erhitzt und mit einem handelsüblichen Rheometer das Drehmoment und der Vernetzungsgrad nach DIN 53529 bestimmt.

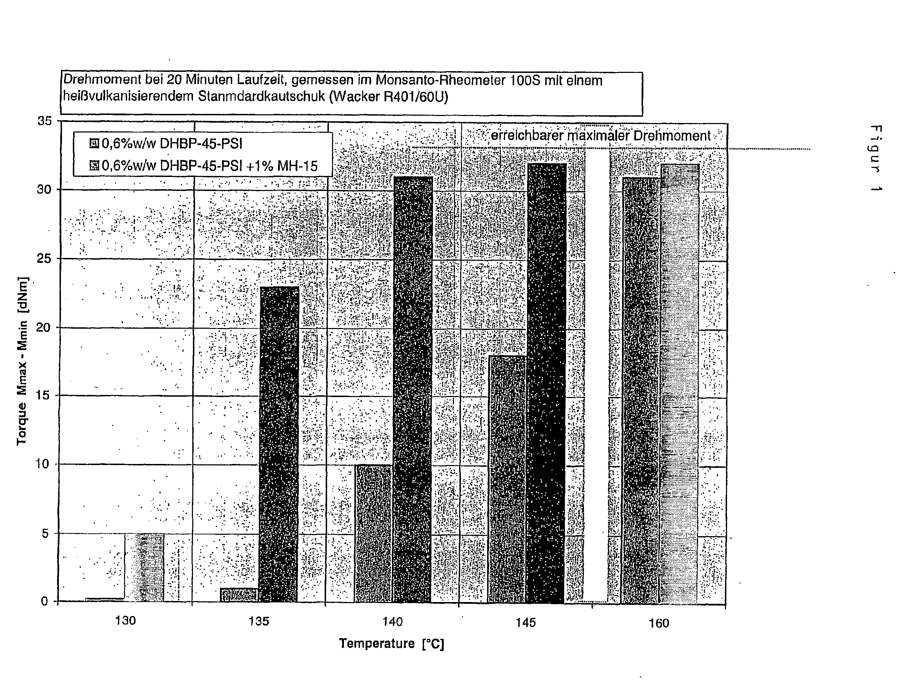

Die erhaltenen Ergebnisse sind in Figur 1 dargestellt.

Wie Figur 1 zeigt, findet in Abwesenheit des Polymethylhydrogensiloxans bei Temperaturen bis 135 °C praktisch keine Vernetzung statt. Nach 20 minütiger Dauer der Erhitzung hat sich die Viskosität nur kaum messbar erhöht. In der erfindungsgemäßen Zusammensetzung wird dagegen bei diesen Temperaturen bereits eine weitgehende Härtung erzielt, die durch einen Drehmomentwert zwischen 20 und 32 dNm charakterisiert ist.

### Beispiel 2

Wie in Beispiel 1 beschrieben, wurde der gleiche Silikonkautschuk mit 2 Gew.-% TMCH-75-AL als Vergleichsversuch und mit weiterem Zusatz von 2 Gew.-% Polymethylhydrogensiloxan bei Temperaturen zwischen 110 und 140 °C vulkanisiert. Figur 2 der Zeichnung zeigt, dass bei 110 bis 120 °C in der Vergleichsprobe ohne Vernetzungskatalysator nur eine geringe Vulkanisation festzustellen ist, während in der erfindungsgemäßen Zusammensetzung eine ausgeprägte Härtung erfolgt.

### Beispiel 3

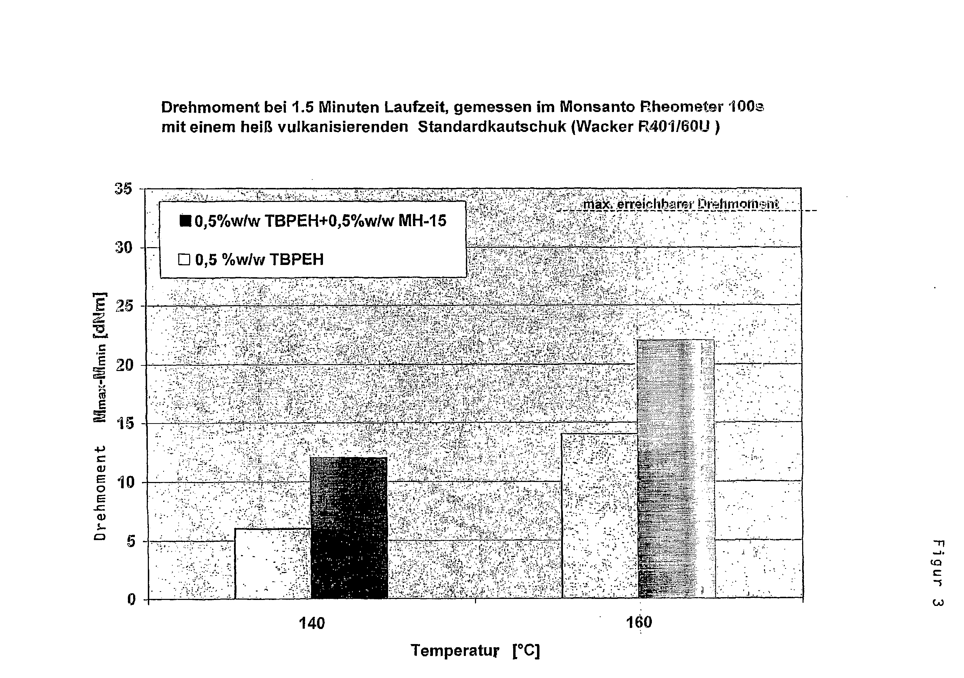

Wie in Beispiel 1 beschrieben, wurde der gleiche Silikonkautschuk mit 0,5 Gew.-% TBPEH (tert.-Butylperoxy-2-ethylhexanoat) mit und ohne Zusatz von 0,5 Gew.-% MH15 bei Temperaturen von 140 und 160 °C 1,5 Minuten vulkanisiert. Die Ergebnisse zeigt Figur 3. Man erkennt, dass mit der erfindungsgemäßen Zusammensetzung in jedem Fall eine wesentlich bessere Vulkanisation erzielt wird.

### Beispiel 4

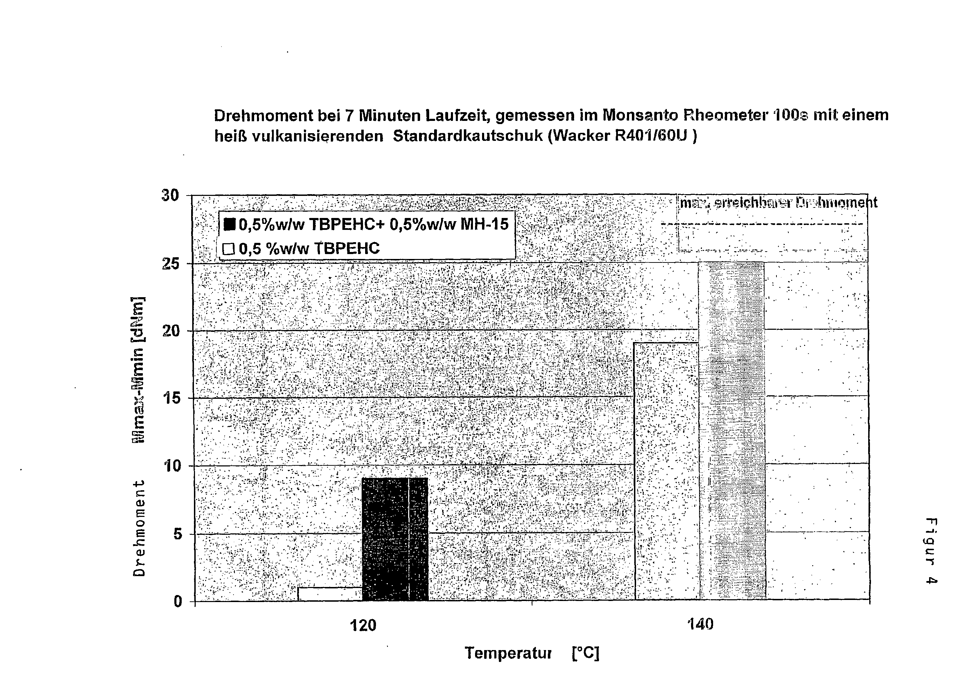

Wie in Beispiel 1 beschrieben, wurde der gleiche Silikonkautschuk mit 0,5 Gew.-% TBPEHC (tert.-Butylperoxy-2-ethylhexylcarbonat) allein als Vergleichsversuch sowie erfindungsgemäß mit weiterem Zusatz von 0,5 Gew.-% MH15 7 Minuten bei 120 und 140 °C vulkanisiert. Die in Figur 4 dargestellten Ergebnisse zeigen, dass bei 120 °C mit TBPEHC alleine kaum eine Vulkanisation erfolgt, während mit der erfindungsgemäßen Zusammensetzung bereits eine erhebliche Vulkanisation stattgefunden hat. Auch bei 140 °C wird mit der erfindungsgemäßen Zusammensetzung eine Vulkanisation erreicht, die bereits dicht an das maximal erreichbare Drehmoment heranführt, während im Vergleichsversuch eine deutlich geringere Vulkanisation vorliegt.

## Patentansprüche

1. Verwendung von Polyorganohydrogensiloxan in einer Menge von 0,1 bis 10 Gew.-% bezogen auf 100 Gew.-Teile Polymer als Mittel zur Herabsetzung der Vernetzungstemperatur bei der Heißvernetzung von organischen Polymeren mit organischen Peroxiden.

2. Verwendung von Polymethylhydrogensiloxan für den Zweck von Anspruch 1.

3. Verwendung nach Anspruch 2,
**dadurch gekennzeichnet,**
**dass** mindestens 30 % der Kettenglieder des Siloxanmoleküls aus CH₃SiH-Gruppen bestehen.

4. Verwendung nach Anspruch 3,
**dadurch gekennzeichnet,**
**dass** mindestens 50 % der Kettenglieder des Siloxanmoleküls aus CH₃SiH-Gruppen bestehen.

5. Verwendung von Polyorganohydrogensiloxan nach einem der vorhergehenden Ansprüche in einer Menge von 0,5 bis 5 Gew.-% bezogen auf das Gewicht des Polymeren.

6. Verwendung von Polyorganohydrogensiloxan nach einem der vorhergehenden Ansprüche zur Heißvernetzung von Silikonkautschuk oder Polyestern.

7. Verwendung nach einem der vorhergehenden Ansprüche,
**dadurch gekennzeichnet,**
**dass** man als organisches Peroxid ein Perketal oder Alkylperoxid einsetzt.

8. Verwendung nach Anspruch 7,
**dadurch gekennzeichnet,**
**dass** man TMCH oder DHBP einsetzt.

9. Verfahren zur Vernetzung von Polymeren durch Erhitzen in Gegenwart mindestens eines organischen Peroxids,
**dadurch gekennzeichnet,**
**dass** man als Vernetzungskatalysator Polyorganohydrogensiloxan in einer Menge von 0,1 bis 10 Gew.-% bezogen auf 100 Gewichtsteile Polymer zusetzt und die Härtung bei einer Temperatur, die mindestens 20 °C unter der Zerfallstemperatur des Peroxids liegt, durchführt.

10. Verfahren nach Anspruch 9,
**dadurch gekennzeichnet,**
**dass** man Polymethylhydrogensiloxan verwendet.

## Claims

1. Use of polyorganohydrogen siloxane in a quantity of 0.1 to 10 % by weight in relation to 100 parts by weight of polymer as an agent for reducing the cross-linking temperature in the hot cross-linking of organic polymers with organic peroxides.

2. Use of polymethylhydrogen siloxane for the purpose of Claim 1.

3. Use according to Claim 2,
**characterised in that** at least 30 % of the chain units of the siloxane molecule comprise CH₃SiH groups.

4. Use according to Claim 3,
**characterised in that** at least 50 % of the chain units of the siloxane molecule comprise CH₃SiH groups.

5. Use of polyorganohydrogen siloxane according to any one of the preceding Claims in a quantity of 0.5 to 5 % by weight in relation to the weight of the polymer.

6. Use of polyorganohydrogen siloxane according to any one of the preceding Claims for the hot cross-linking of silicone rubber or polyesters.

7. Use according to any one of the preceding Claims,
**characterised in that** a perketal or alkyl peroxide is used as organic peroxide.

8. Use according to Claim 7,
**characterised in that** TMCH or DHBP is used.

9. A method for the cross-linking of polymers by heating in the presence of at least one organic peroxide, **characterised in that** as cross-linking catalyst polyorgano-hydrogen siloxane is added in a quantity of 0.1 to 10 % by weight in relation to 100 parts by weight of polymer and the curing is carried out at a temperature which is at least 20°C below the decomposition temperature of the peroxide.

10. A method according to Claim 9,
**characterised in that** polymethylhydrogen siloxane is used.

## Revendications

1. Utilisation de polyorganohydrogénosiloxane en une quantité de 0,1 à 10 % en poids rapportée à 100 parties en poids de polymère en tant qu'agent de réduction de la température de réticulation lors de la réticulation à chaud de polymères organiques avec des peroxydes organiques.

2. Utilisation de polyméthylhydrogénosiloxane pour le but de la revendication 1.

3. Utilisation selon la revendication 2, **caractérisée en ce qu'**au moins 30 % des chaînons du siloxane sont des groupes CH₃-SiH.

4. Utilisation selon la revendication 3, **caractérisée en ce qu'**au moins 50 % des chaînons du siloxane sont des groupes CH₃-SiH.

5. Utilisation de polyorganohydrogénosiloxane selon l'une des revendications précédentes en une quantité de 0,5 à 5 % en poids rapportée au poids du polymère.

6. Utilisation de polyorganohydrogénosiloxane selon l'une des revendications précédentes, pour la réticulation à chaud de caoutchouc silicone ou de polyesters.

7. Utilisation selon l'une des revendications précédentes,**caractérisé en ce que** l'on met en oeuvre, en tant que peroxyde organique, un peracétal ou un peroxyde d'alkyle.

8. Utilisation selon la revendication 7, **caractérisée en ce que** l'on met en oeuvre du TMCH ou du DHBP.

9. Procédé pour la réticulation de polymères par chauffage en présence d'au moins un peroxyde organique, **caractérisé en ce que** l'on ajoute, en tant que catalyseur de réticulation, du polyorganohydrogénosiloxane en une quantité de 0,1 à 10 % en poids, rapportée à 100 parties en poids de polymère et l'on conduit le durcissement à une température inférieure d'au moins 20°C à la température de décomposition du peroxyde.

10. Procédé selon la revendication 9, **caractérisé en ce que** l'on utilise du polyméthylhydrogénosiloxane.
